# EUROPEAN PATENT APPLICATION

(11) **EP 2 950 432 A1**
(43) Date of publication of application: **02.12.2015**
(21) Application number: 14170273.8
(22) Date of filing: 28.05.2014
(51) Int. Cl.: H02M 1/06, H02M 1/42, H02M 7/162, H02M 7/19

(54) **Rectifier with controllable power factor and method for controlling the rectifier**

(71) Applicant: ABB Technology Ltd, 8050 Zürich (CH)
(72) Inventor: Bosga, Sjoerd, 723 53 Västerås (SE)
(74) Representative: Savela, Reino Aleksi

(57) **Abstract**

The present disclosure relates to a rectifier comprising: a converter cell (3-1, 3-n) comprising: a first leg (7) having two reverse-blocking switches (7a, 7b) connected in series and arranged to provide current conduction along the same direction, a second leg (9) having two reverse-blocking switches (9a, 9b) connected in series and arranged to provide current conduction along the same direction, wherein one reverse-blocking switch (7a) of the first leg is connected to a reverse-blocking switch (9a) of the second leg thus defining a first output terminal (11a) of the converter cell (3-1, 3-n), and wherein the other reverse-blocking switch (7b) of the first leg (7) is connected to the other reverse-blocking switch (9b) of the second leg (9) thus defining a second output terminal (11b) of the converter cell (3-1, 3-n), wherein the converter cell (3-1, 3-n) has a first input terminal (13a) between the two reverse-blocking switches (7a, 7b) of the first leg (7) and a second input terminal (13b) between the two reverse-blocking switches (9a, 9b) of the second leg (9), a coil (5) connected to the first input terminal (13a) and the second input terminal (13b), wherein the coil (5) is a winding of an electromagnetic induction device, which coil (5) is arranged to provide a coil current in the converter cell (3-1, 3-n), and a commutator circuit (15) arranged to selectively switch a polarity across the reverse-blocking switches (7a, 7b, 9a, 9b) to set the reverse-blocking switches (7a, 7b, 9a, 9b) in a non-conducting state independently of a magnitude of the coil current. A method of controlling the rectifier is also disclosed herein.

## Description

### TECHNICAL FIELD

The present disclosure generally relates to power electronic devices. In particular it relates to a rectifier utilising power electronic switches of the type which are reverse-blocking, and to a method of controlling the rectifier.

### BACKGROUND

Controllable rectifiers utilising reverse-blocking switches which are of non-turn-off type typically have a very bad power factor. Reverse-blocking switches are switches which are controllable to conduct current in a first direction and which always block currents in a second direction which is reverse relative to the first direction. A non-turn-off type switch is a switch which cannot be turned off simply by means of a control signal, which is possible for turn-off type switches such as IGBTs. Instead, a non-turn-off type switch can only be turned off when the current flowing through it is zero or very close to zero. A thyristor is a typical example of a reverse-blocking switch which is of non-turn-off type.

Usually controllable rectifiers comprising reverse-blocking switches, and which are also of non-turn-off type need to be accompanied by both power factor compensation and harmonic filters.

A better power factor can be obtained by using a different type of power electronic switches, which have turn-off capability. An example of such a switch is the IGBT. This allows furthermore obtaining more sinusoidal input currents by using a higher switching frequency. This solution, however, has significantly higher losses, both due to conduction losses of the IGBTs and due to their switching losses. Furthermore, IGBTs are quite expensive compared to simpler power electronic switches.

### SUMMARY

In view of the above, an object of the present disclosure is to provide a rectifier which utilises simple switches and which may provide unity power factor without external power factor compensation.

Hence, according to a first aspect of the present disclosure there is provided a rectifier comprising a converter cell comprising: a first leg having two reverse-blocking switches connected in series and arranged to provide current conduction along the same direction, a second leg having two reverse-blocking switches connected in series and arranged to provide current conduction along the same direction, wherein one reverse-blocking switch of the first leg is connected to a reverse-blocking switch of the second leg thus defining a first output terminal of the converter cell, and wherein the other reverse-blocking switch of the first leg is connected to the other reverse-blocking switch of the second leg thus defining a second output terminal of the converter cell, wherein the converter cell has a first input terminal between the two reverse-blocking switches of the first leg and a second input terminal between the two reverse-blocking switches of the second leg, a coil connected to the first input terminal and the second input terminal, wherein the coil is a winding of an electromagnetic induction device, which coil is arranged to provide a coil current in the converter cell, and a commutator circuit arranged to selectively switch a polarity across the reverse-blocking switches to set the reverse-blocking switches in a non-conducting state independently of a magnitude of the coil current.

An effect which may be obtainable thereby is that depending on when the commutator circuit switches the polarity across a reverse-blocking switch, the power factor may be controlled. In particular, by suitably switching on the reverse-blocking switches, and afterwards suitably switching the polarity across the reverse-blocking switches, the power factor may be set to unity, i.e. 1. This may especially be obtained also for low commutation frequencies, namely one commutation per half-cycle of the voltage induced across the coil. Losses may thus be comparable to existing thyristor rectifiers which have low losses.

One embodiment comprises a switch control unit arranged to selectively set each of the reverse-blocking switches in an on-state.

According to one embodiment the switch control unit is arranged to selectively set the reverse-blocking switches in the on-state at a first time instance prior to a voltage across the coil reaches its maximum positive value or minimum negative value.

According to one embodiment the commutator circuit is arranged to selectively reduce the current flowing through the reverse-blocking switches at a second time instant within the same half-cycle as the maximum positive value or minimum negative value, after the voltage across the coil has reached its maximum positive value or minimum negative value, wherein the first time instant and the second time instant define a time interval which is approximately centred around the maximum positive value or minimum negative value.

By providing commutation once in the same half-cycle of the sinusoidal voltage induced in the coil, especially at voltage levels which are above or below zero depending on the polarity of the half-cycle, without including any point with zero voltage, an internal power factor of 1 may be obtained. In other words, the voltage induced in the coil and the coil current are in phase. Alternatively, by varying the center position of the time interval, a total power factor of 1 may be obtained, i.e. the total voltage across the coil and the coil current are in phase.

By varying the time interval centred on the maximum positive or minimum negative value, the voltage level across the first output terminal and the second output terminal of the converter cell may be controlled. The shorter the time interval the lower is the average voltage level across the first output terminal and the second output terminal.

One embodiment comprises a plurality of converter cells, each converter cell comprising: a first leg having two reverse-blocking switches connected in series and arranged to provide current conduction along the same direction, a second leg having two reverse-blocking switches connected in series and arranged to provide current conduction along the same direction, wherein one reverse-blocking switch of the first leg is connected to a reverse-blocking switch of the second leg thus defining a first output terminal of the converter cell, and wherein the other reverse-blocking switch of the first leg is connected to the other reverse-blocking switch of the second leg thus defining a second output terminal of the converter cell, wherein the converter cell has a first input terminal between the two reverse-blocking switches of the first leg and a second input terminal between the two reverse-blocking switches of the second leg, a coil connected to the first input terminal and the second input terminal, wherein the coil is a winding of an electromagnetic induction device, which coil is arranged to provide a coil current in the converter cell, and a commutator circuit arranged to selectively switch a polarity across the reverse-blocking switches to set the reverse-blocking switches in a non-conducting state independently of a magnitude of the coil current, wherein the converter cells are connected in series by means of their respective first output terminals and second output terminals, and wherein each coil is connected to the first input terminal and the second input terminal of only one converter cell.

One embodiment comprises a plurality of switch control units, each being associated with a respective converter cell, and each switch control unit being arranged to selectively set each of the reverse-blocking switches of a converter cell in an on-state.

According to one embodiment the switch control unit of each converter cell is arranged to selectively set the reverse-blocking switches in an on-state at a first time instance prior to a voltage across the coil reaches its maximum positive value or minimum negative value.

According to one embodiment the commutator circuit is arranged to selectively switch the polarity across the reverse-blocking switches at a second time instant within the same half-cycle as the maximum positive value or minimum negative value, after the voltage across the coil has reached its maximum positive value or minimum negative value, wherein the first time instant and the second time instant define a time interval which is approximately centred around the maximum positive value or minimum negative value.

According to one embodiment the rectifier is arranged to selectively set one or several of the converter cells in a bypass state for longer than a half-cycle by setting both reverse-blocking switches of either the first leg or the second leg in the on-state and the remaining reverse-blocking switches of that converter cell in a non-conducting state, to thereby control an output voltage level of the rectifier.

According to one embodiment a coil of a first converter cell of the converter cells is arranged to provide alternating current voltages with a first amplitude to the first input terminal and second input terminal of the first converter cell and wherein a coil of a second converter cell of the converter cells is arranged to provide alternating current voltages with a second amplitude to the first input terminal and second input terminal of the second converter cell.

According to one embodiment each reverse-blocking switch is of a non-turn-off type, which is a switch that cannot be turned off by means of a control signal to its gate.

According to one embodiment each reverse-blocking switch is one of one of a thyristor, a reverse-blocking IGBT, a reverse-blocking IGCT and a GTO.

According to a second aspect of the present disclosure there is provided a method of controlling a rectifier, wherein the method comprises: providing a converter cell comprising a first leg having two reverse-blocking switches connected in series and arranged to provide current conduction along the same direction, a second leg having two reverse-blocking switches connected in series and arranged to provide current conduction along the same direction, wherein one reverse-blocking switch of the first leg is connected to a reverse-blocking switch of the second leg thus defining a first output terminal of the converter cell, and wherein the other reverse-blocking switch of the first leg is connected to the other reverse-blocking switch of the second leg thus defining a second output terminal of the converter cell, wherein the converter cell has a first input terminal between the two reverse-blocking switches of the first leg and a second input terminal between the two reverse-blocking switches of the second leg, and a coil connected to the first input terminal and the second input terminal, wherein the coil is a winding of an electromagnetic induction device, providing a coil current in the coil, switching one reverse-blocking switch of each of the first leg and the second leg into an on-state, and controlling a commutator circuit to selectively switch a polarity across the reverse-blocking switches which are in the on-state to set these reverse-blocking switches in a non-conducting state independently of a magnitude of the coil current.

One embodiment comprises switching the reverse-blocking switches to the on-state at a first time instant prior to a voltage across the coil reaches its maximum positive value or minimum negative value.

According to one embodiment controlling of the commutator circuit comprises switching the polarity of the reverse-blocking switches at a second time instant within the same half-cycle as the maximum positive value or minimum negative value, after the voltage across the coil has reached its maximum positive value or minimum negative value, wherein the first time instant and the second time instant define a time interval which is approximately centred around the maximum positive value or minimum negative value.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically depicts a rectifier comprising converter cells;
Fig. 2 schematically illustrates a converter cell of the rectifier in Fig. 1;
Fig. 3 depicts an example of a realisation of the converter cell in Fig. 2;
Figs 4a-c schematically depict how current flows through the converter cell in Fig. 3;
Fig. 5 depicts one example of a commutation circuit of a converter cell; and
Figs 6a-b illustrate voltage and current graphs of voltages and currents output by the converter cell in any of Figs 2 and 3, and of coil voltages and currents.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

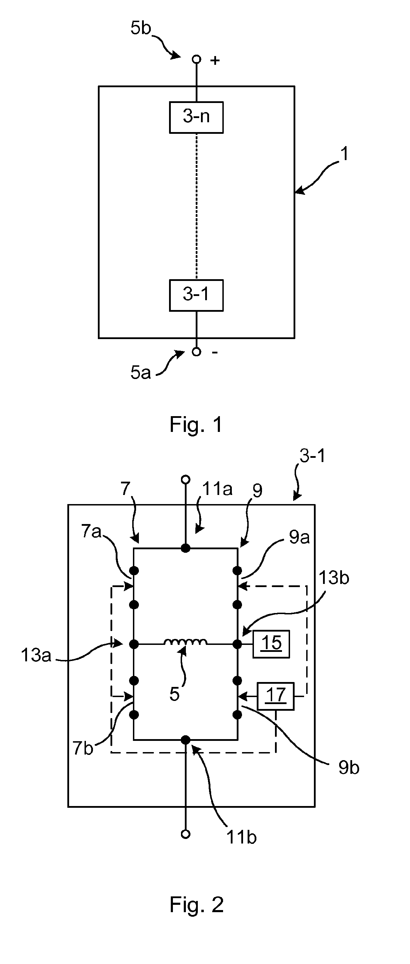

Fig. 1 discloses a general example of a rectifier 1 comprising a plurality of converter cells 3-1 to 3-n cascade connected in series. Although more than one converter cell 3-1,..,3-n is shown in the example in Fig. 1, variations of rectifier 1 comprising only one converter cell are also envisaged herein.

The rectifier may further comprise a smoothing capacitor or inductance for smoothing the rectified voltage or current, not shown in Fig. 1. The rectifier 1 has two output terminals 5a and 5b which may be connected to a DC load, and across which a DC voltage is provided when the rectifier 1 is in operation.

The rectifier 1 is adapted to receive its alternating current input signal(s) from an electromagnetic induction device such as a power transformer. Each converter cell 3-1,..,3-n thus comprises a respective coil 5 which is the winding of an electromagnetic induction device, as schematically shown in Fig. 2. In case the electromagnetic induction device is a transformer e.g. a power transformer, the windings may be the secondary windings of the transformer. The electromagnetic induction device could according to one variation be a rotating transformer, e.g. a machine, wherein the windings may be the secondary windings of the rotating transformer, if the rotating machine has any, or simply the windings, if it does not have primary and secondary windings.

According to a typical implementation, the electromagnetic induction device may have three primary windings arranged to be connected to three electrical phases of an AC grid, and six secondary windings which are connected to a and form part of a respective converter cell, with phase shift of 30 degrees between induced voltages. Variations with 9, 12,.. etc. coils is according to one example envisioned. An increased number of secondary windings can improve the primary current of the electromagnetic induction device and also the rectifier output voltage or current.

The rectifier may furthermore in some variations comprise parallel branches of cascade connected converter cells, which may be necessary for very high power applications.

Turning now to Fig. 2, the structure of an example of a converter cell 3-1 will now be described in more detail. It should be noted that the converter cells 3-1,...3-n in typical embodiments are essentially identical, except for the fact that in some variations of the rectifier 1, the number of turns for the respective coils 5 may differ. In other variations of the rectifier 1, all coils 5 have an equal number of turns. According to one variation it is however envisaged that at least one of the converter cells 3-1,...,3-n has switches which are diodes, i.e. all switches are diodes of at least one converter cell. This converter cell would not comprise a commutation circuit. Such a variation would also comprise converter cells which have gate-controlled switches, which will be described in more detail in the following.

The converter cell 3-1 comprises a first leg 7 comprising two reverse-blocking switches 7a and 7b connected in series. They are connected such that they are able to conduct current in the same direction along the first leg 7. The converter cell 3-1 comprises a second leg 9 comprising two reverse-blocking switches 9a and 9b connected in series. They are connected such that they are able to conduct current in the same direction along the second leg 9.

A first reverse-blocking switch 7a of the first leg 7 is connected to a first reverse-blocking switch 9a of the second leg 9. The converter cell 3-1 has a first output terminal 11a defined between the first reverse-blocking switch 7a of the first leg 7 and the first reverse blocking switch 9a of the second leg 9.

A second reverse-blocking switch 7b of the first leg 7 is connected to a second reverse-blocking switch 9b of the second leg 9. The converter cell 3-1 has a second output terminal 11b defined between the second reverse-blocking switch 7b of the first leg 7 and the second reverse blocking switch 9b of the second leg 9.

The first output terminal 11a is connected to the second output terminal of an adjacent converter cell and the second output terminal 11b is connected to the first output terminal of another adjacent converter cell. Alternatively, the first output terminal may be the output terminal 5a of the rectifier and the second output terminal may be the output terminal 5b of the rectifier, depending on the position and/or the number of converter cells in the rectifier.

The converter cell 3-1 has a first input terminal 13a between the two reverse-blocking switches 7a and 7b of the first leg 7 and a second input terminal 13b between the two reverse blocking switches 9a and 9b of the second leg 9. As mentioned above, the converter cell 3-1 also comprises a coil 5, which is connected to the first input terminal 13a and the second input terminal 13b. The converter cell 3-1 can thereby be supplied with an alternating current input from the electromagnetic induction device to which it is connected.

The converter cell 3-1 further comprises a commutation circuit 15 which is arranged to selectively control the polarity across the reverse-blocking switches 7a, 7b, 9a, and 9b to thereby be able to set the reverse-blocking switches 7a, 7b, 9a and 9b into their non-conducting state, i.e. turning off the reverse-blocking switches 7a, 7b 9a and 9b from their on-state independently of the magnitude of a coil current flowing through the coil 5 and thus of any current flowing through these reverse-blocking switches 7a, 7b, 9a, 9b. The converter cell 3-1 may thereby be provided with reverse-blocking switches 7a, 7b, 9a and 9b which are of non-turn-off type, but nevertheless obtain full control of the states of the reverse-blocking switches. An example of such reverse-blocking switches of non-turn-off type are thyristors.

In general, the commutation circuit may comprise one or more auxiliary switches and a voltage source, such as one or more capacitors, which may be connected to the first leg 7 and the second leg 9 by means of the auxiliary switch(es) to thereby selectively switch the polarity across those reverse-blocking switches 7a, 7b, 9a, and 9b which currently are in the on-state. The polarity across one reverse-blocking switch may be switched at a time, or the polarity across two reverse-blocking switches may be switched simultaneously, depending on the particular implementation of the commutation circuit. By proper dimensioning of the voltage sources, e.g. the capacitor(s), the current flowing through these reverse-blocking switches is by means of the polarity switch reduced to zero or essentially zero, which results in that the reverse-blocking switches in the on-state may be set in their non-conducting states independently of the magnitude of the coil current.

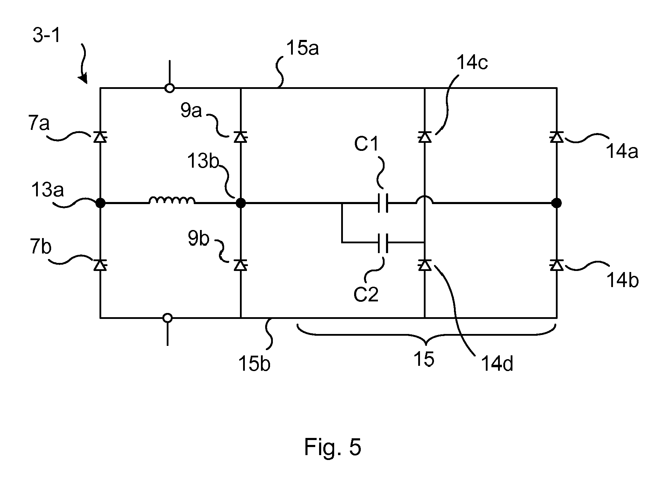

The commutation circuit 15 may be implemented in a plurality of ways, for example in the manners disclosed in not yet published European patent application EP14162538.4. One example of a commutation circuit 15 which is disclosed in the mentioned European patent application is depicted in Fig. 5. This variation of the commutation circuit 15 comprises terminals 15a and 15b which are connected to the first output terminal 11a and to the second output terminal 11b, respectively, of the converter cell 3-1. The exemplified commutation circuit 15 comprises four auxiliary switches 14a-14d in the form of thyristors. The auxiliary switches 14a-14d are pairwise connected between the first output terminal 11a and the second output terminal 11b. The commutation circuit 15 further comprises a voltage source in the form of a first capacitor C₁ and a second capacitor C₂. The first capacitor C₁ is connected between the second input terminal 13b of the converter cell 3-1 and the two series connected auxiliary switches 14a and 14b. The second capacitor C₂ is connected between the second input terminal 13b of the converter cell 3-1 and the two other series connected auxiliary switches 14c and 14d. By switching the auxiliary switches 14a-14d in a suitable manner, the polarity across the reverse-blocking switches 7a, 7b and 9a, 9b may be selectively switched such that current flowing through the reverse-blocking switches 7a, 7b and 9a, 9b may be reduced sufficiently to set reverse-blocking switches 7a, 7b and 9a, 9b which are in the on-state in their non-conducting state.

The rectifier 1 further comprises a switch control unit 17 which is arranged to control the reverse-blocking switches 7a, 7b and 9a, 9b by providing triggering signals to their respective gate to selectively set the reverse-blocking switches 7a, 7b and 9a, 9b in their on-state, which is a state in which they conduct current and in which they are forward biased. Typically, the switch control unit would also control the auxiliary switches in the commutation circuit. A switch control unit 17 may be a local unit with one switch control unit 17 comprised in each converter cell 3-1,...,3-n and being arranged to control only the reverse-blocking switches 7a-9b of the converter cell which it is associated with, or the switch control unit may be a global switch control unit which controls the switching of all reverse-blocking switches in all the converter cells 3-1,...,3-n. The rectifier may according to one variation comprise a global switch control unit arranged to coordinate commutation of all the converter cells, and a plurality of local switch control units which are arranged to be provided with instructions from the global switch control unit.

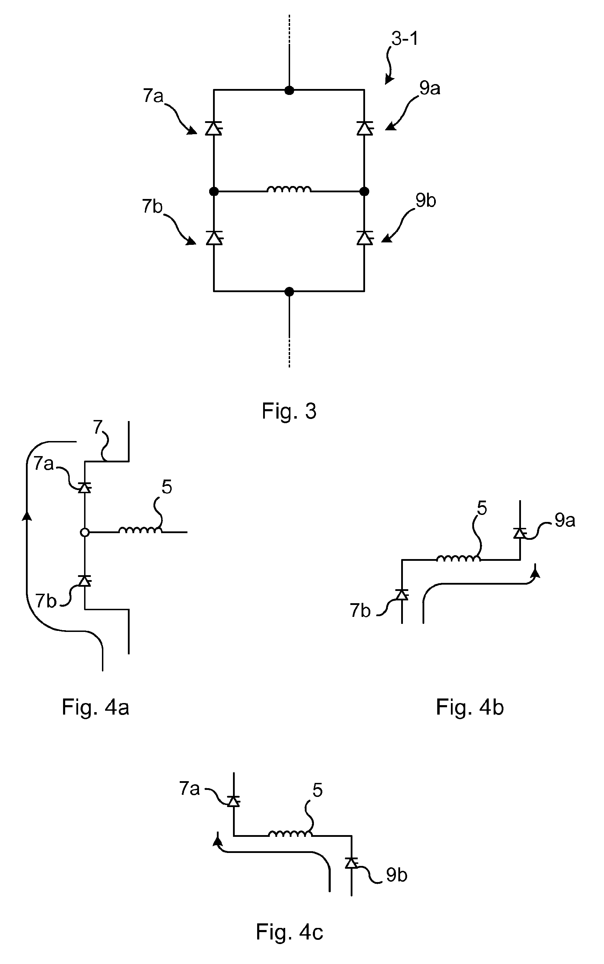

Fig. 3 depicts an example of a realisation of the converter cell 3-1. The reverse-blocking switches 7a, 7b and 9a, 9b are according to this example thyristors. The converter cell is Fig. 3 is shown without the commutator circuit and the switch control unit for reasons of clarity. Typically all the converter cells 3-1 to 3-n have the same type of reverse-blocking switches 7a, 7b and 9a, 9b, so a rectifier 1 which comprises the converter cell 3-1 in Fig. 3 would normally have thyristors as reverse-blocking switches in all its remaining converter cells.

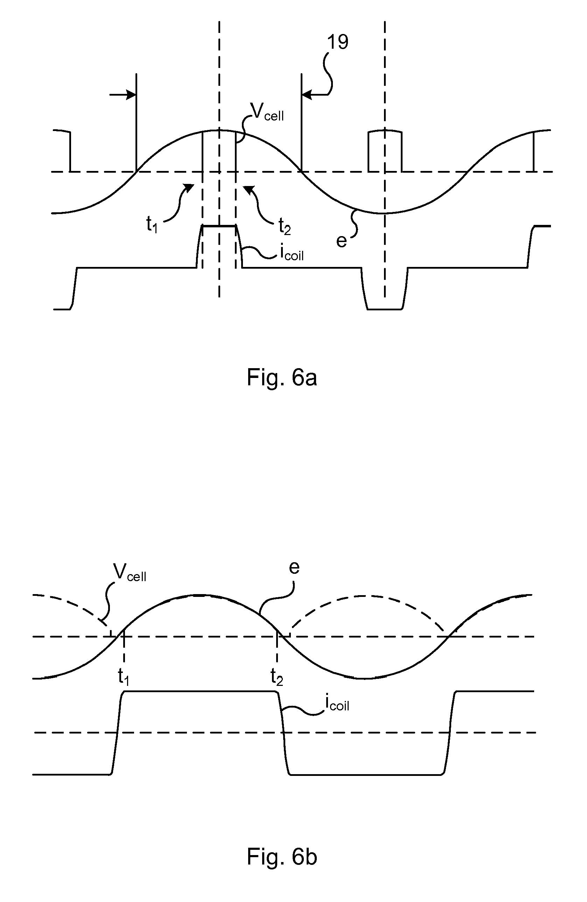

Figs 4a-c depict one example of how the reverse-blocking switches may be commutated within a converter cell, while Figs 6a and 6b show examples of when the reverse-blocking switches are to be commutated in order to obtain unity power factor in the electromagnetic induction device.

The situation in Fig. 4a may be the starting point of this example, when also considering for example Fig. 6a. In Fig. 4a the converter cell is bypassed by setting both reverse-blocking switches 7a and 7b of the first leg 7 in their on-state and having both reverse-blocking switches 9a and 9b in the second leg in their non-conducting state. In this case the current flowing through the converter cell will not flow through the coil 5. This corresponds to the situation in the first half-cycle 19 in Fig. 6a prior to a first time instant t1. The converter cell voltage v_{cell} provided by the converter cell in Fig. 4a is thus zero at this time.

By means of the commutation circuit 15 the upper reverse-blocking switch 7a in Fig. 4a may be commutated and set in its non-conducting state by changing the polarity across it and thus the magnitude of the current flowing through it. Moreover, the switch control unit 17 may set the upper reverse-blocking switch 9a into its on-state at a first time instant t1, wherein a current may flow through the reverse-blocking switches 7b and 9a and through the coil. These operations are preferably performed essentially simultaneously at the first time instant t1.

The first time instant t1 occurs after an induced voltage e in the coil 5 reaches a magnitude which is greater than or less than zero, depending on the polarity of the induced voltage. Moreover, the first time instant t1 occurs prior to the maximum positive or minimum negative value of the voltage e across the coil 5, i.e. the voltage induced in the coil 5, is reached. At a second time instant t2 the converter cell is set into bypass mode by the commutator circuit 15, by switching the polarity across one of the reverse-blocking switches 7a and 9a. The situation in Fig. 4a or a mirrored configuration will thus be obtained. The second time instant t2 is within the same half-cycle, after the maximum positive or minimum negative value of the voltage across the coil 5 has been obtained. In particular, the time interval between the first time instant t1 and the second time instant t2 is centred or approximately centred on the maximum positive or minimum negative value across the coil 5. As can be seen in the lower graph in Fig. 6a, the coil current is perfectly in phase with the induced voltage e in the coil. It should be noted that by varying the centre position of the time interval, relative to the centre position of a half-cycle, i.e. shifting the commutation instances, full control of the internal and external power factor may be obtained. To this end, the time interval may be symmetric or non-symmetric with respect to the midpoint of a half-cycle.

In the subsequent half-cycle, the commutation circuit 15 will switch the polarity across reverse-blocking switch 7b in case of the situation in Fig. 4a, and the switch control unit 17 will set reverse-blocking switch 9b in the on-state, as shown in Fig. 4c.

In this manner the voltage output of the converter cell(s) may be controlled.

By varying the length of the time interval, i.e. the first time instant t1 and the second time instant t2, the converter cell voltage level may be varied, and resulting in that the output level of the rectifier 1 may be varied. In Fig. 6b an example is shown where the reverse-blocking switches are in their on-state shown in Figs 4b and 4c for a longer period of time, i.e. the time interval between the first time instant t1 and the second time instant t2 is longer.

Depending on the magnitude of the DC voltage output needed from the rectifier 1 one or more converter cells 3-1,...,3-n may be bypassed as long as necessary. By bypassing a suitable number of converter cells the voltage level of the rectifier 1 may be controlled, since a bypassed converter cell will not add to the DC voltage output of the rectifier 1.

According to one variation the coils may have a different number of turns, resulting in that the voltage levels across the coils will differ. In combination with the above-described bypass control of selected converter cells as long as necessary, the DC voltage output level of the rectifier 1 may be controlled even more precisely.

The inventive concept has mainly been described above with reference to a few examples. However, as is readily appreciated by a person skilled in the art, other embodiments than the ones disclosed above are equally possible within the scope of the inventive concept, as defined by the appended claims. The reverse-blocking switches may instead of thyristors for example be reverse-blocking IGBTs, reverse-blocking IGCTs, GTOs or any other reverse-blocking switches.

## Claims

1. A rectifier (1) comprising:
a converter cell (3-1,...,3-n) comprising:
a first leg (7) having two reverse-blocking switches (7a, 7b) connected in series and arranged to provide current conduction along the same direction,
a second leg (9) having two reverse-blocking switches (9a, 9b) connected in series and arranged to provide current conduction along the same direction, wherein one reverse-blocking switch (7a) of the first leg is connected to a reverse-blocking switch (9a) of the second leg thus defining a first output terminal (11a) of the converter cell (3-1, 3-n), and wherein the other reverse-blocking switch (7b) of the first leg (7) is connected to the other reverse-blocking switch (9b) of the second leg (9) thus defining a second output terminal (11b) of the converter cell (3-1,...,3-n),
wherein the converter cell (3-1, 3-n) has a first input terminal (13a) between the two reverse-blocking switches (7a, 7b) of the first leg (7) and a second input terminal (13b) between the two reverse-blocking switches (9a, 9b) of the second leg (9),
a coil (5) connected to the first input terminal (13a) and the second input terminal (13b), wherein the coil (5) is a winding of an electromagnetic induction device, which coil (5) is arranged to provide a coil current in the converter cell (3-1,...,3-n), and
a commutator circuit (15) arranged to selectively switch a polarity across the reverse-blocking switches (7a, 7b, 9a, 9b) to set the reverse-blocking switches (7a, 7b, 9a, 9b) in a non-conducting state independently of a magnitude of the coil current.

2. The rectifier (1) as claimed in claim 1, comprising a switch control unit (17) arranged to selectively set each of the reverse-blocking switches (7a, 7b, 9a, 9b) in an on-state.

3. The rectifier (1) as claimed in claim 2, wherein the switch control unit (17) is arranged to selectively set the reverse-blocking switches (7a, 7b, 9a, 9b) in an on-state at a first time instant (t1) prior to a voltage (e) across the coil (5) reaches its maximum positive value or minimum negative value.

4. The rectifier (1) as claimed in claim 3, wherein the commutator circuit (15) is arranged to selectively switch the polarity across the reverse-blocking switches (7a, 7b, 9a, 9b) at a second time instant (t2) within the same half-cycle as the maximum positive value or minimum negative value, after the voltage across the coil has reached its maximum positive value or minimum negative value, wherein the first time instant (t1) and the second time (t2) instant define a time interval which is approximately centred around the maximum positive value or minimum negative value.

5. The rectifier (1) as claimed in any of the preceding claims, comprising a plurality of converter cells (3-1,...,3-n), each converter cell (3-1,...,3-n) comprising:
a first leg (7) having two reverse-blocking switches (7a, 7b) connected in series and arranged to provide current conduction along the same direction,
a second leg (9) having two reverse-blocking switches (9a, 9b) connected in series and arranged to provide current conduction along the same direction, wherein one reverse-blocking switch (7a) of the first leg is connected to a reverse-blocking switch (9a) of the second leg thus defining a first output terminal (11a) of the converter cell (3-1, 3-n), and wherein the other reverse-blocking switch (7b) of the first leg (7) is connected to the other reverse-blocking switch (9b) of the second leg (9) thus defining a second output terminal (11b) of the converter cell (3-1,...,3-n),
wherein the converter cell (3-1,...,3-n) has a first input terminal (13a) between the two reverse-blocking switches (7a, 7b) of the first leg (7) and a second input terminal (13b) between the two reverse-blocking switches (9a, 9b) of the second leg (9),
a coil (5) connected to the first input terminal (13a) and the second input terminal (13b), wherein the coil (5) is a winding of an electromagnetic induction device, which coil (5) is arranged to provide a coil current in the converter cell (3-1,...,3-n), and
a commutator circuit (15) arranged to selectively switch a polarity across the reverse-blocking switches (7a, 7b, 9a, 9b) to set the reverse-blocking switches (7a, 7b, 9a, 9b) in a non-conducting state independently of a magnitude of the coil current,
wherein the converter cells (3-1,...,3-n) are connected in series by means of their respective first output terminals (11a) and second output terminals (11b), and wherein each coil (5) is connected to the first input terminal (13a) and the second input terminal (13b) of only one converter cell.

6. The rectifier (1) as claimed in claim 5, comprising a plurality of switch control units (17), each being associated with a respective converter cell (3-1,...,3-n), and each switch control unit (17) being arranged to selectively set each of the reverse-blocking switches (7a, 7b, 9a, 9b) of a converter cell in an on-state.

7. The rectifier (1) as claimed in claim 5 or 6, wherein the switch control unit (17) of each converter cell (3-1,...,3-n) is arranged to selectively set the reverse-blocking switches (7a, 7b, 9a, 9b) in an on-state at a first time instant (t1) prior to a voltage (e) across the coil (5) reaches its maximum positive value or minimum negative value.

8. The rectifier (1) as claimed in claim 7, wherein the commutator circuit (15) of each converter cell (3-1,...,3-n) is arranged to selectively switch the polarity across the reverse-blocking switches (7a, 7b, 9a, 9b) at a second time instant (t2) within the same half-cycle as the maximum positive value or minimum negative value, after the voltage across the coil has reached its maximum positive value or minimum negative value, wherein the first time instant (t1) and the second time instant (t2) define a time interval which is centred around the maximum positive value or minimum negative value.

9. The rectifier (1) as claimed in any of claims 5-8, wherein the rectifier (1) is arranged to selectively set one or several of the converter cells in a bypass state for longer than a half-cycle by setting both reverse-blocking switches of either the first leg (7) or the second leg (9) in the on-state and the remaining reverse-blocking switches of that converter cell in a non-conducting state, to thereby control an output voltage level of the rectifier (1).

10. The rectifier (1) as claimed in any of claims 5-9, wherein a coil of a first converter cell of the converter cells is arranged to provide alternating current voltages with a first amplitude to the first input terminal and second input terminal of the first converter cell and wherein a coil of a second converter cell of the converter cells is arranged to provide alternating current voltages with a second amplitude to the first input terminal and second input terminal of the second converter cell.

11. The rectifier (1) as claimed in any of the preceding claims, wherein each reverse-blocking switch is of a non-turn-off type, which is a switch that cannot be turned off by means of a control signal to its gate.

12. The rectifier (1) as claimed in any of the preceding claims, wherein each reverse-blocking switch (7a, 7b, 9a, 9b) is one of one of a thyristor, a reverse-blocking IGBT, a reverse-blocking IGCT and a GTO.

13. A method of controlling a rectifier (1), wherein the method comprises:
providing a converter cell (3-a,...3-n) comprising a first leg (7) having two reverse-blocking switches (7a, 7b) connected in series and arranged to provide current conduction along the same direction, a second leg (9) having two reverse-blocking switches (9a, 9b) connected in series and arranged to provide current conduction along the same direction, wherein one reverse-blocking switch (7a) of the first leg (7) is connected to a reverse-blocking switch (9a) of the second leg (9) thus defining a first output terminal (11a) of the converter cell (3-1,...,3-n), and wherein the other reverse-blocking switch (7b) of the first leg (7) is connected to the other reverse-blocking switch (9b) of the second leg (9) thus defining a second output terminal (11b) of the converter cell (3-1,...,3-n), wherein the converter cell (3-1,...,3-n) has a first input terminal (13a) between the two reverse-blocking switches (7a, 7b) of the first leg (7) and a second input terminal (13b) between the two reverse-blocking switches (9a, 9b) of the second leg (9), and a coil (5) connected to the first input terminal (13a) and the second input terminal (13b), wherein the coil (5) is a winding of an electromagnetic induction device,
providing a coil current in the coil (5),
switching one reverse-blocking switch of each of the first leg (7) and the second leg (9) into an on-state, and
controlling a commutator circuit (15) to selectively switch a polarity across the reverse-blocking switches (7a, 7b, 9a, 9b) which are in the on-state to set these reverse-blocking switches (7a, 7b, 9a, 9b) in a non-conducting state independently of a magnitude of the coil current.

14. The method as claimed in claim 11, comprising switching the reverse-blocking switches (7a, 7b, 9a, 9b) to the on-state at a first time instant (t1) prior to a voltage across the coil (5) reaches its maximum positive value or minimum negative value.

15. The method as claimed in claim 13, wherein the controlling of the commutator circuit (15) comprises switching the polarity of the reverse-blocking switches (7a, 7b, 9a, 9b) at a second time instant (t2) within the same half-cycle as the maximum positive value or minimum negative value, after the voltage across the coil (5) has reached its maximum positive value or minimum negative value, wherein the first time instant (t1) and the second time instant (t2) define a time interval which is approximately centred around the maximum positive value or minimum negative value.
